# EUROPÄISCHE PATENTSCHRIFT

(11) **EP 1 278 611 B1**
(45) Veröffentlichungstag und Bekanntmachung des Hinweises auf die Patenterteilung: **02.07.2008**
(21) Anmeldenummer: 01921092.1
(22) Anmeldetag: 23.04.2001
(51) Int. Cl.: B23K 26/067, B65C 9/46, G06K 1/12

(54) **VORRICHTUNG ZUR BESCHRIFTUNG VON GEGENSTÄNDEN MITTELS LASERSTRAHLEN**
DEVICE FOR INSCRIBING OBJECTS USING LASER BEAMS
DISPOSITIF POUR L'INSCRIPTION D'INFORMATIONS SUR DES OBJETS A L'AIDE DE FAISCEAUX LASER

(30) Priorität: 25.04.2000 CH 809002000
(43) Veröffentlichungstag der Anmeldung: 29.01.2003
(73) Patentinhaber: TecPharma Licensing AG, 3401 Burgdorf (CH)
(72) Erfinder: NISSELS, Robert, CH-2052 Fontainemelon (CH); VUILLEUMIER, Jean-Claude, Ch-2016 Cortaillod (CH)
(86) Internationale Anmeldenummer: PCT/CH2001/000254
(87) Internationale Veröffentlichungsnummer: WO 2001/081039

(56) Entgegenhaltungen:
- WO-A-97/31747
- WO-A-99/21722
- DE-A- 4 125 007
- US-A- 3 524 046
- PATENT ABSTRACTS OF JAPAN vol. 010, no. 018 (M-448), 24. Januar 1986 (1986-01-24) & JP 60 177982 A (SUMITOMO DENKI KOGYO KK), 11. September 1985 (1985-09-11)

## Beschreibung

Die Erfindung betrifft Vorrichtungen zur Beschriftung von Gegenständen mittels Laserstrahlen gemäss Oberbegriff des Anspruchs 1.

Zunehmende regulatorische Anforderungen an die Kennzeichnung von Produkten oder deren Verpackung, insbesondere an Produkte, welche die Gesundheit von Personen gefährden können, wie zum Beispiel Medizinprodukte, aber auch Arznei- und Lebensmittel, haben zur Folge, dass auf diesen Produkten diverse Informationen angebracht werden müssen.

Neben dem Anbringen dieser Informationen auf den Produkten oder der Verpackung durch Stempel, werden zunehmend die Mittel der Lasertechnologie angewendet. DE 41 25 007 und WO 99/21722 offenbaren jeweils Vorrichtungen zum Abringen von Informationen auf Etiketten, Verpackungen und Produkten. Die Beschriftung erfolgt durch Einbrennen in die Oberfläche der Gegenstände bzw. in eine auf der Oberfläche angeordneten Spezialbeschichtung.

Aus der WO 99/21722 ist ein System zur Lasermarkierung bekannt, bei dem eine Bedruckung auf einer Produktverpackung durch einen Laserstrahl durchgeführt wird. Die Ablenkung des Strahls zur Erstellung des Bedruckungsmusters wird durch einen Computer gesteuert, um direkt auf eine Produktverpackung oder ein Produkt zu schreiben. Mittels eines Sensors wird eine Abweichung von der vorbestimmten Laserstrahlablenkung detektiert. Somit können Fehler in der Bedruckung festgestellt und behoben werden.

Aus der JP 60177982 ist eine Vorrichtung bekannt, durch die ein Gegenstand auf zwei Seiten beschriftet werden kann. Hierfür strahlt eine Laserquelle einen einzigen Laserstrahl aus, der direkt auf den Bedruckungsgegenstand gerichtet ist, jedoch vor seinem Auftreffen auf den Gegenstand durch eine Abschirmplatte am Auftreffen auf den Gegenstand gehindert wird. Der Strahl wird geteilt, um in spiegelsymmetrischer Weise auf zwei gegenüberliegende Seiten des Bedruckungsgegenstandes zur Durchführung der Bedruckung aufzutreffen.

Der Erfindung liegt die Aufgabe zugrunde, eine Vorrichtung zur Beschriftung von Gegenständen mittels Laserstrahlen zu schaffen, welche die Beschriftung eines Gegenstandes von mehreren Seiten ermöglicht, ohne dass dessen Position verändert zu werden braucht.

Die Aufgabe wird erfindungsgemäss durch eine Vorrichtung nach dem Patentanspruch 1 gelöst. Vorteilhafte Weiterbildungen sind Gegenstand der rückbezogenen Unteransprüche.

Die durch die Erfindung erreichten Vorteile sind im wesentlichen darin zu sehen, dass keine zusätzlichen Produktionsschritte benötigt werden, um einen Gegenstand auf mehreren Seiten zu beschriften.
Gemäß der vorliegenden Erfindung umfasst die Vorrichtung zur Beschriftung eines Gegenstands mittels eines Laserstrahls einen Laserstrahler zur Abgabe eines Laserstrahls und zumindest ein Abbildungsmittel, um den Laserstrahl von dem Laserstrahler auf einen Brennpunkt am bzw. auf dem Gegenstand abzubilden, wobei der Laserstrahler so ausgelegt ist, dass ein Laserstrahl unter zumindest zwei unterschiedlichen Austrittswinkeln abgebbar ist, wobei abhängig vom Austrittswinkel eines Laserstrahls aus dem Laserstrahler der zumindest eine Laserstrahl einem Umlenkmittel zugeordnet ist, so dass mindestens zwei verschiedene Seiten des Gegenstands ohne Positionsänderung des Gegenstands beschriftbar sind.

Erfindungsgemäß können deshalb mehrere Strahlengänge im voraus eingerichtet werden, beispielsweise durch Justierung und Fokussierung, wobei die Strahlenlänge jeweils so ausgelegt sind, dass, wenn ein Laserstrahl diesen durchläuft, jeweils eine andere Seite des zu beschriftenden Gegenstands beschriftet wird. Durch einfache Auswahl des Austrittswinkels, unter dem der Laserstrahl aus der Austrittsöffnung des Laserstrahles austritt, kann der zu durchlaufende Strahlengang und somit die zu beschriftende Seite des Gegenstands gewählt werden, ohne dass dann nochmals aufwändige Justierungs- und Fokussierungsarbeiten erforderlich wären.

Zur Veränderung des Austrittswinkels umfasst der Laserstrahler vorzugsweise ein dem Laser nachgeordnetes Ablenkmittel, wozu vorzugsweise ein Galvanospiegel verwendet wird.

Wenn die Beschriftung des Gegenstands nicht mittels Belichtung einer einen Schriftzug enthaltenden Maske erfolgt sondern durch geringfügige Variation des Austrittswinkels des Laserstrahls aus dem Laserstrahler, so kann das Ablenkmittel vorteilhaft auch dazu verwendet werden, um die zum Laserschreiben erforderlichen geringfügigen Variationen des Austrittswinkels des Laserstrahls aus dem Laserstrahler zu bewerkstelligen.

Vorteilhaft ist, dass das hierfür vorgesehene Ablenkmittel nahe zum Laser angeordnet ist, wo der aus dem Laser austretende Lichtstrahl noch einen vergleichsweise kleinen Strahldurchmesser hat. Somit können auf dem Ablenkmittel vergleichsweise kleine Spiegel angebracht werden, die deshalb eine vergleichsweise kleine Masse aufweisen können und somit ein vergleichsweise kleines Trägheitsmoment, so dass das Laserbeschreiben vorteilhaft rasch und mit einer vorteilhaft kleinen Vorrichtung bewerkstelligt werden kann.

Bevorzugt erfolgt der Schreibvorgang mit einem im wesentlichen senkrecht auf die zu beschriftende Oberfläche des Gegenstands auftreffenden Lichtstrahl. Gemäß einer bevorzugten Ausführungsform der Erfindung wird zum Beschreiben der Vorderseite des Gegenstands der im wesentlichen gradlinig aus dem Laserstrahler austretende Laserstrahl verwendet. Zum Beschreiben von anderen Seiten des Gegenstands, insbesondere linke/rechte Seite oder Ober-/Unterseite, werden die unter dem vorbestimmten anderen Austrittswinkel austretenden Laserstrahlen mittels geeignet positionierter Umlenkmittel so auf die jeweilig zu beschreibende Seite des Gegenstands gerichtet, dass der umgelenkte Laserstrahl im wesentlichen senkrecht auf die zu beschriftende Oberfläche auftrifft. Zur Justierung der Vorrichtung muss der Gegenstand dann nur mit seiner Vorderseite in den Strahlengang des geradlinig aus dem Laserstrahles austretenden Lichtstrahl positioniert und ein geeigneter Abstand zum Laserstrahler gewählt werden.

Gemäß dieser Ausführungsform besteht eine optische Weglängendifferenz zwischen dem Strahlengang des geradlinigen, d.h. auf die Vorderseite des zu beschriftenden Gegenstands auftreffenden Laserstrahls, und dem zumindest einen Strahlengang, der ein Umlenkmittel, beispielsweise einen Spiegel, umfasst. Solche optischen Weglängendifferenzen bewirken je nach Strahlengang eine unterschiedliche Fokussierung und unterschiedliche Abbildungsverhältnisse. Die unterschiedlichen Fokussierungsverhältnisse können im Falle des kontinuierlichen Laserschreibens je nach Strahlengang zu einer unterschiedlichen Dicke und Helligkeit des Schriftzugs führen. Die unterschiedlichen Abbildungsverhältnisse können, je nach Strahlengang, zu einer unterschiedlichen Schriftgröße führen, wenn das in dem Laserstrahler vorhandene Ablenkmittel die Laserbeschriftung in jedem der Strahlengänge in gleicher Weise bewirkt.

Zum Ausgleich der optischen Weglängendifferenzen kann in dem kürzesten Strahlengag, insbesondere für den auf die Vorderseite des Gegenstands auftreffenden Lichtstrahl, und/oder in zumindest einem weiteren Strahlengang der Vorrichtung ein Ausgleichsmittel vorgesehen sein, so dass vorzugsweise die optischen Weglängen sämtlicher Strahlengänge der Vorrichtung im wesentlichen gleich sind. Somit können in vorteilhaft einfacher Weise in sämtlichen Strahlengängen der Vorrichtung im wesentlichen einheitliche Fokussierungs- und Abbildungsverhältnisse geschaffen werden. Ein Schriftzug kann deshalb auf sämtlichen zu beschriftenden Seiten des Gegenstands mit gleicher Intensität und Größe aufgebracht werden.

Besonders vorteilhaft ist, dass die Fokussierung für sämtliche Strahlengänge mittels einer einzigen Linse bzw. Objektiv bewerkstelligt werden kann.

Als Ausgleichsmittel eignen sich insbesondere eine in dem kürzesten, beispielsweise auf die Vorderseite des Gegenstands auftreffenden, Strahlengang angeordnete Linse, insbesondere eine Defokussierungslinse, eine Anordnung von in Draufsicht an den Ecken eines Rechtecks und unter 45° zu den Seiten des Rechtecks angeordneten Spiegeln oder ein Paar bestehend aus einem 90°-Prisma und zwei Spiegeln, wobei die Basisseite des Prismas den unter 45° angeordneten Spiegeln zugewandt ist.

Damit die erfindungsgemäße Vorrichtung noch flexibler eingesetzt werden kann, können Änderungen der optischen Weglängen der weiteren Strahlengänge, d.h. der Strahlengänge mit den Umlenkmitteln, ausgeglichen werden durch Variation des Abstands zwischen den Spiegeln und der Reflektoranordnung des Ausgleichsmittels.

Bevorzugte Ausführungsbeispiele der Erfindung sind in den Figuren dargestellt. Es zeigen:

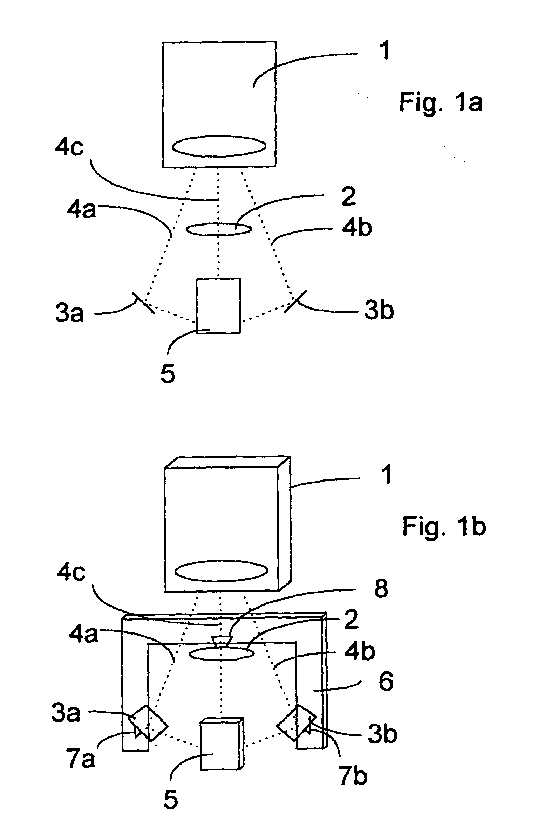

- Fig. 1 a: eine bevorzugte erfindungsgemässe Laserbeschriftungsvorrichtung
- Fig. 1 b: eine zur bevorzugten Vorrichtung angeordnete Trägervorrichtung
- Fig. 2: eine andere Ausführungsform der erfindungsgemässen Laserbeschriftungsvorrichtung
- Fig. 3: eine weitere Ausführungsform der erfindungsgemässen Laserbeschriftungsvorrichtung

In Figur 1 wird die bevorzugte Ausführungsform, bestehend aus einer Laserstrahlen 4a,4b,4c gleicher Intensität generierenden Vorrichtung, im folgenden als Laserstrahler 1 bezeichnet, einer Linse 2 und zwei Spiegeln 3a,3b, dargestellt. Im Zentrum zwischen der Linse 2 und den Spiegeln 3a,3b befindet sich ein Gegenstand 5. Um denselben Gegenstand 5, ohne Veränderung von dessen Position, auf mehreren Seiten beschriften zu können, müssen die vom Laserstrahler 1 generierten Laserstrahlen 4a,4b,4c mit gleicher Intensität auf die Oberfläche bzw. auf eine auf der Oberfläche angeordnete Spezialschicht des Gegenstandes 5 einfallen können. Da die Wege, die die Laserstrahlen 4a,4b,4c zurückzulegen haben, um auf verschiedene Seiten des Gegenstandes 5 zu gelangen, unterschiedlich lang sind - nur eine Seite des Gegenstandes 5 kann Senkrecht zum Laserstrahler 1 stehen, die anderen Seiten des Gegenstandes 5 befinden sich, je nach Form des Gegenstandes, näher oder weiter vom Laserstrahler 1 entfernt - müssen die Laserstrahlen 4a,4b,4c mittels Spiegeln 3a,3b und Linse 2 umgelenkt werden können, damit sie Senkrecht auf die entsprechende Seite der Oberfläche fallen können. Um die Intensität des Laserstrahls 4c, insbesondere den Fokusdurchmesser auf der Oberfläche des Gegenstands, gleich zu halten wie diejenige der anderen Laserstrahlen 4a,4b, wird der Weg des Laserstrahls 4c, mittels einer Linse 2, insbesondere einer relativ schwachen Defokussierungslinse, künstlich verlängert, so dass der Weg des Laserstrahls 4c identisch ist den Wegen der Laserstrahlen 4a,4b über die Spiegel 3a,3b.
Je nach Modell gibt der Laserstrahler 1 die Laserstrahlen 4a,4b,4c entweder nacheinander oder gleichzeitig ab. Zur gleichzeitigen Abgabe mehrerer Laserstrahlen 4a, 4b, 4c unter unterschiedlichen Austrittswinkeln kann an der Austrittsöffnung des Laserstrahles 1 und dem darin enthaltenen Laser nachgeordnet ein geeignetes Ablenkmittel vorgesehen sein. Dies kann eine Kombination aus geeigneten Strahlteilern sein, die so bemessen sind, dass die Intensitäten in den drei Strahlengängen 4a-c im wesentlichen gleich sind. Das Ablenkmittel kann auch ein akustoptischer Modulator sein, der das aus dem Laser austretende Licht aufgrund einer in dem Modulator ausgebildeten akustischen Stehwelle in die unterschiedlichen Beugungsordnungen (-1.-Beugungsordnung, 0.-Beugungsordnung, +1.-,Beugungsordnung) beugt. Sowohl Beugungsordnung als auch herausgebeugte Intensität können nahezu beliebig gewählt werden.

Die Beschriftung der senkrecht zum Laserstrahler 1 liegenden Seite des Gegenstandes 5 erfolgt derart, dass der Laserstrahl 4c senkrecht aus dem Laserstrahler austritt und durch die Linse 2 auf die Oberfläche bzw. auf eine auf der Oberfläche angeordnete Spezialschicht des Gegenstandes 5 auftrifft und einen bestimmten Punkt durch Anbrennung verfärbt. Kleine Veränderungen des Austrittwinkels des Laserstrahls 4c aus dem Laserstrahler 1 führen dazu, dass der Strahl über die Oberfläche bzw. die Spezialschicht des Gegenstandes 5 wandert und diese so anbrennt dass am Gegenstand 5 lesbare Zeichen angebracht werden.

Um die zum Beschriften erforderlichen kleinen Veränderungen des Austrittswinkels zu erzeugen, kann in dem Laserstrahler 1, dem Laser nachgeordnet, ein Ablenkmittel angeordnet sein, das vorzugsweise computergesteuert den Austrittswinkel geringfügig ändert. Besonders bevorzugt wird hierzu ein Galvanospiegel oder eine Kombination aus zwei Galvanospiegeln mit zueinander orthogonalen Achsen zur Verstellung in zwei Raumrichtungen verwendet. Als Ablenkmittel sind auch geeignete Kombinationen von X/Y-/θ-Verstelleinheiten oder Kombinationen solcher Einheiten mit einem oder mehreren Galvanospiegeln möglich. Diese sollten mittels eines Computers ansteuerbar sein, um den Schriftzug durch Strahlablenkung zu generieren.

Soll eine andere Seite desselben Gegenstandes 5 beschriftet werden, erfolgt durch eine grössere Veränderung des Austrittwinkels des Laserstahls 4a,4b aus dem Laserstrahler 1 eine Wegveränderung, so dass der Laserstrahl 4a,4b über einen Spiegel 3a,3b auf eine andere Seite des Gegenstandes 5 auftrifft. Die Beschriftung dieser Seite des Gegenstandes 5 erfolgt ebenfalls durch leichte Veränderungen des Austrittwinkels.

Auch die große Veränderung des Austrittswinkels kann durch ein in dem Laserstrahler 1, dem Laser nachgeordnet angeordnetes Ablenkmittel erzeugt werden. Hierzu sind die vorgenannten Ablenkmittel verwendbar.

Die Laserstrahlen 4a, 4b und 4c unterscheiden sich einzig in unterschiedlichen Austrittwinkeln aus dem Laserstrahler 1. Allerdings unterscheiden sich die optischen Weglängen der unterschiedlichen Strahlengänge 4a, 4b und 4c. Bei der in den Figuren gezeigten dreiecksymmetrischen Anordnung sind die Weglängen der den Dreieckseiten entsprechenden Strahlengänge 4a und 4b im wesentlichen gleich, während die Länge des der Mittelsenkrechten entsprechenden Strahlengangs 4c kürzer ist.

Die unterschiedlichen optischen Weglängen in den Strahlengängen 4a-c bewirken unterschiedliche Fokussierungs- und Abbildungsverhältnisse in den einzelnen Strahlengängen. Wenn, wie in Figur 1 gezeigt, an der Austrittsöffnung des Laserstrahlers 1 eine Linse bzw. ein Objektiv vorgesehen ist, das so ausgelegt ist, dass die den Dreieck seitens folgenden Strahlengängen 4a und 4b gerade auf die Seitenflächen des Gegenstands 5 fokussiert sind, so wäre der geradlinig aus dem Laserstrahler 1 austretende Laserstrahl 4c ohne das Vorhandensein der Linse 2 nicht auf die Vorderseite des Gegenstands 5 fokussiert, was zu einer unscharfen Schrift, einer anderen Dicke des Schriftzugs, zu einer anderen Größe und dergleichen führen würde. Zum Ausgleich der optischen Weglängendifferenz ist in dem kürzeren, d.h. dem geradlinig aus dem Laserstrahler 1 austretenden, Strahlengang 4c eine Linse bzw. ein Objektiv 2 vorgesehen, das zu einer geringfügigen Defokussierung des Laserstrahls in diesem Strahlengang führt. Die Brennweite der Linse bzw. des Objektivs 2 ist so gewählt, dass der aus dem Laserstrahler 1 austretende Laserstrahl 4c in derselben Weise auf die Vorderseite des Gegenstands 5 fokussiert wird, wie in den Strahlengängen 4a und 4b. Somit ist eine gleiche Intensität bzw. Schriftstärke gewährleistet.

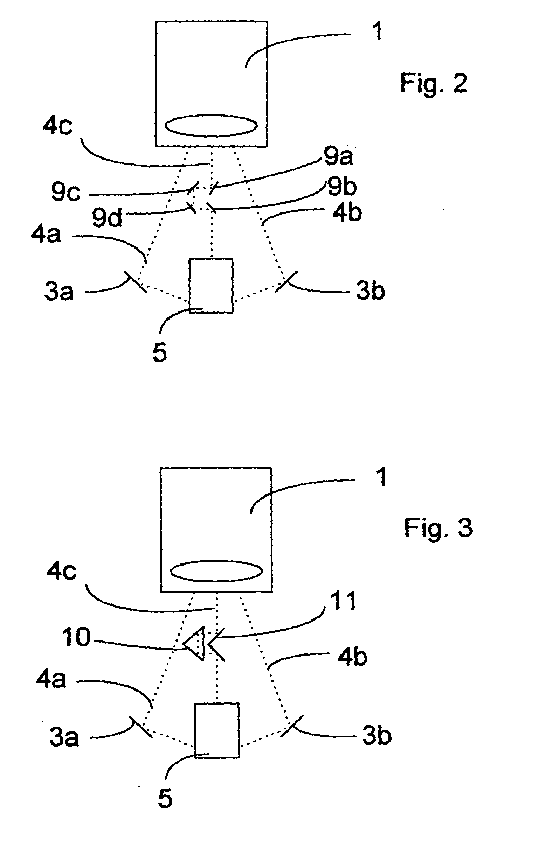

Fig. 2 zeigt eine andere Ausführungsform der erfindungsgemässen Vorrichtung. Anstelle einer Umlenkung bzw. Defokussierung über die Linse 2, wird der Weg des senkrechten Laserstrahls 4c mittels weiterer Spiegel 9a-9d verlängert. Insbesondere wird die optische Weglänge in dem mittleren Strahlengang 4c durch die als Ausgleichsmittel wirkende Anordnung von Spiegeln 9a-d an die optische Weglänge der Strahlengänge 4a, 4b angepasst.

Die in Figur 2 gezeigte Anordnung von Spiegeln 9 entspricht einer Retroreflektor-Anordnung, mit in Draufsicht an den Eckpunkten eines Rechtecks und unter 45° angeordneten Spiegeln 9a-b, so dass der in der Reflektoranordnung senkrecht zum Strahlengang 4c hin- und zurücklaufende Strahl mittels des Austrittspiegels 9b auf die Vorderseite des Gegenstands 5 gerichtet wird.

Fig. 3 zeigt eine weitere Ausführungsform der erfindungsgemässen Vorrichtung. Anstelle einer Umlenkung über die Linse 2, treten eine V-förmige Spiegelkombination 11 und ein 9°-Prisma 10. Auch diese Ausführungsform führt lediglich zu einer Verlängerung des Weges des senkrechten Laserstrahls 4c und dient dem Ausgleich optischer Weglängendifferenzen. Das 90°-Prisma 10 wirkt als Retroreflektor für den von dem oberen Spiegel 11 eintretenden Lichtstrahl, der parallel aber achsversetzt zu dem unteren Austrittspiegel 11 zurückgeworfen wird und über diesen auf die Vorderseite des Gegenstands 5 abgebildet wird.

Bei der Anordnung gemäß den Figuren 2 und 3 kann eine Änderung der Länge der Strahlengänge 4a, 4b, die beispielsweise dann auftritt, wenn die Strahlen 4a, 4b nicht mehr senkrecht sondern unter einem anderen Winkel auf dem Gegenstand auftreffen sollen oder wenn der Gegenstand weiter weg von dem Laserstrahler 1 angeordnet werden soll, durch Ändern des Abstands zwischen Eintritts- und Austrittsspiegeln 9a, 9b; 11 und den Reflektorspiegeln 9c, 9d bzw. dem Prisma 10 des Ausgleichsmittels kompensiert werden. Die Änderung dieses Abstands erfolgt vorzugsweise computergesteuert. Da erfindungsgemäß ein Retroreflektor verwendet wird, ändert sich auch bei Änderung dieses Abstands die Position des Laserstrahls 4c auf der Vorderseite des Gegenstands 5 nicht.

Aufgrund der Tatsache, dass die optischen Weglängendifferenzen zwischen den unterschiedlichen Strahlengängen 4a-c mittels der Linse 2 bzw. den Ausgleichsmitteln 9, 10, 11 kompensiert werden, kann ein einziges Objektiv für sämtliche Strahlengänge verwendet werden, was kostengünstig ist. Dieses Objektiv kann beispielsweise an der Austrittsöffnung des Laserstrahles 1 angeordnet sein. Bei den vorgenannten Ausführungsformen kann deshalb auch ein hochwertiges Präzisionsobjektiv, das gegebenenfalls den zu beschreibenden Schriftzug als Maske enthalten kann, verwendet werden.

Wenn die Beschriftung nicht mittels Belichtung einer den aufzubringenden Schriftzug enthaltenden Maske erfolgt sondern durch Ablenkung des Schreibstrahls, so können die hierzu erforderlichen geringfügigen Änderungen des Austrittswinkels der Laserstrahlen entweder mittels eines Ablenkmittels im Laserstrahler 1 oder direkt mittels der Umlenkmittel 3a, 3b der jeweiligen Strahlengänge bewerkstelligt werden. Geeignete Ablenkmittel sind dem Fachmann geläufig. Insbesondere kann in dem Laserstrahler, nahe dessen Austrittsöffnung, ein Galvanospiegel oder eine Kombination aus mehreren Galvanospiegeln oder eine Kombination aus Galvanospiegeln und mechanischen Positioniereinheiten oder ein akustoptischer Modulator angebracht sein. Auch die Umlenkspiegel 3a, 3b können Galvanospiegeln sein.

Bei unsymmetrischen Gegenständen können zudem unterschiedliche Linsen mit unterschiedlichen Spiegelpositionen kombiniert werden, um die verschiedenen Seiten des Gegenstandes 5 zu beschriften.

Einfachere Laserstrahler 1 erlauben lediglich kleine Veränderungen eines grundsätzlich senkrechten Austrittwinkels eines Laserstrahls 4c. Bei solchen Laserstrahlern 1 erfolgt die Umlenkung des Laserstrahls 4c, zur Auswahl einer bestimmten Seite des Gegenstandes 5, über beweglich angeordnete Umlenkmittel 2,3a,3b,9a-9d,10,11. Auch bei solchen Laserstrahlern 1 dienen kleine Veränderungen des Austrittwinkels des Laserstrahls 4c zur Beschriftung der ausgewählten Seite des Gegenstandes 5. Einzig die Ansteuerung der Seite des Gegenstandes 5 erfolgt durch Bewegung der Umlenkmittel 2,3a,3b,9a-9d,10,11.

Um eine möglichst standfeste Anordnung der Spiegel 3a,3b und der Linse 2 zu ermöglichen, werden Spiegel 3a,3b und Linse 2 vorzugsweise an einer nicht in den Achsen der Laserstrahlen 4a,4b,4c liegenden torbogenförmigen Trägervorrichtung 6 (Fig. 1 b) derart befestigt, dass sie an, vom Torbogen 6 abstehenden, Haltevorrichtungen 7a,7b,8 befestigt werden und in die Achsen der Laserstrahlen 4a,4b,4c hineinragen. Laserstrahler 1 und Torbogen 6 sind vorzugsweise einstückig ausgebildet, um Veränderungen der Positionierung zueinander durch Erschütterungen zu verhindern. Sie können aber auch, wie in Fig. 1b gezeigt, als unabhängige Vorrichtungen gebaut werden.

Der Gegenstand 5 befindet sich vorzugsweise auf einer Produktionsstrasse (nicht gezeichnet), so dass nach erfolgter Beschriftung automatisch eine Verschiebung des Gegenstandes 5 erfolgt und an dessen Stelle der nächste zu beschriftende Gegenstand tritt.

Nachfolgend werden noch einige weitere bevorzugte Ausführungsformen der Erfindung dargelegt:
A. Vorrichtung zur Beschriftung eines Gegenstandes (5), bestehend aus
   a) einem, Laserstrahlen (4a,4b,4c) von identischer Intensität abgebenden, Laserstrahler (1),
   b) einer Anordnung von Umlenkmitteln (2,3a,3b,9a-9d,10,11) zur Lenkung der Laserstrahlen (4a,4b,4c) vom Ausgangspunkt des Laserstrahlers (1) zu einem Brennpunkt am Gegenstand (5),
   dadurch gekennzeichnet, dass
   abhängig vom Austrittwinkel eines Laserstrahls (4a,4b,4c) aus dem Laserstrahler (1) der jeweilige Laserstrahl (4a,4b,4c) einem Umlenkmittel (2,3a,3b,9a-9d,10,11) zugeordnet wird und dadurch mindestens zwei Seiten des Gegenstandes (5) beschriftbar sind.
B. Vorrichtung nach Ausführungsform A, dadurch gekennzeichnet, dass die Umlenkmittel mindestens eine Linse (2) und einen Spiegel (3a,3b) umfassen.
C. Vorrichtung nach Ausführungsform A, dadurch gekennzeichnet, dass die Umlenkmittel (2,3a,3b,9a-9d,10,11) mehrere Spiegel (9a-9d) umfassen.
D. Vorrichtung nach Ausführungsform A, dadurch gekennzeichnet, dass die Umlenkmittel (2,3a,3b,9a-9d,10,11) mehrere Spiegel (3a,3b,11) und ein Prisma (10) umfassen.
E. Vorrichtung nach eine der Ausführungsformen A-D, dadurch gekennzeichnet, dass die Umlenkmittel (2,3a,3b,9a-9d,10,11) an einem Torbogen (6) angeordnet sind.
F. Vorrichtung nach Ausführungsform E, dadurch gekennzeichnet, dass die Laserstrahlervorrichtung (1) und der Torbogen (6) einstückig ausgebildet sind.
G. Vorrichtung nach einer der vorhergehenden Ausführungsformen, dadurch gekennzeichnet, dass eine Linse (2) die kürzeste Strahlenweglänge verlängert.
H. Vorrichtung nach einer der vorhergehenden Ausführungsformen, dadurch gekennzeichnet, dass der Laserstrahler (1) mehrere Laserstrahlen (4a,4b,4c), mit unterschiedlichen Austrittwinkeln, gleichzeitig generiert.
I. Vorrichtung nach einer der vorhergehenden Ausführungsformen, dadurch gekennzeichnet, dass der Laserstrahler (1) Laserstrahlen (4a,4b,4c) mit bestimmbaren Austrittwinkeln in einer bestimmbaren Reihenfolge generiert.
K. Vorrichtung zur Beschriftung eines Gegenstandes (5), bestehend aus
   a) einem, einen Laserstrahl (4c) abgebenden, Laserstrahler (1),
   b) einer Anordnung von Umlenkmitteln (2,3a,3b,9a-9d,10,11) zur Lenkung der Laserstrahlen (4a,4b,4c) vom Ausgangspunkt des Laserstrahlers (1) zu einem Brennpunkt am Gegenstand (5),
dadurch gekennzeichnet, dass
durch bewegliche Ausgestaltung der Umlenkmittel (2,3a,3b,9a-9d,10,11) mehrere Seiten des Gegenstandes (5) beschriftbar sind.

## Patentansprüche

1. Vorrichtung zur Beschriftung eines Gegenstandes (5) mittels eines Laserstrahls, umfassend:
a) einen Laserstrahler (1) zur Abgabe eines Laserstrahls (4a-c) und
b) zumindest ein Abbildungsmittel (2), um den Laserstrahl von dem Laserstrahler (1) auf einen Brennpunkt am Gegenstand (5) abzubilden,
**dadurch gekennzeichnet, dass**
c) der Laserstrahler (1) ausgelegt ist, um einen Laserstrahl unter zumindest zwei unterschiedlichen Austrittswinkeln abzugeben und somit mehrere Strahlengänge eingerichtet sind,
d) wobei abhängig vom Austrittswinkel eines Laserstrahls (4a-c) aus dem Laserstrahler (1) zumindest ein Laserstrahl einem Umlenkmittel (3a, 3b; 9a-d, 10, 11) zugeordnet ist, so dass Strahlenlängen der Strahlengänge jeweils so ausgelegt sind, dass, wenn ein Laserstrahl diese durchläuft, mindestens zwei verschiedene Seiten des Gegenstands (5) ohne Positionsänderung des Gegenstands beschriftbar sind,
e) wobei in dem kürzesten Strahlengang und/oder in zumindest einem weiteren Strahlengang ein Ausgleichsmittel vorgesehen ist, so dass die optischen Weglängen sämtlicher Strahlengänge gleich sind.

2. Vorrichtung nach Anspruch 1, **dadurch gekennzeichnet, dass** der Laserstrahler (1) einen Laser sowie zumindest ein Ablenkmittel umfasst, um den Austrittswinkel des jeweiligen Laserstrahls (4a-c) aus dem Laserstrahler (1) durch Ablenken eines Laserstrahls, der aus dem Laser austritt, zu ändern.

3. Vorrichtung nach Anspruch 2, **dadurch gekennzeichnet, dass** das Ablenkmittel ein Galvanospiegel ist.

4. Vorrichtung nach einem der vorhergehenden Ansprüche, bei der eine Linse (2) in einem ersten Strahlengang angeordnet ist, um den Laserstrahl (4c) auf eine erste Seite des Gegenstands (5) abzubilden, und/oder bei der in zumindest einem weiteren Strahlengang (4a, 4b) jeweils zumindest ein Spiegel (3a, 3b) vorgesehen ist, um den Laserstrahl auf zumindest eine weitere Seite des Gegenstands (5) umzulenken.

5. Vorrichtung nach Anspruch 4, **dadurch gekennzeichnet, dass** in dem ersten Strahlengang und/oder in zumindest einem weiteren Strahlengang das Ausgleichsmittel (9, 10, 11) vorgesehen ist, um die optische Weglängendifferenz zwischen dem ersten Strahlengang (4c) und dem zumindest einen weiteren Strahlengang (4a, 4b) auszugleichen.

6. Vorrichtung nach Anspruch 5, **dadurch gekennzeichnet, dass** das Ausgleichsmittel eine Anzahl Spiegel (9a, b; 11) und eine Reflektoranordnung (10; 9c, d) umfasst.

7. Vorrichtung nach Anspruch 6, **dadurch gekennzeichnet, dass** der Abstand zwischen den Spiegeln (9a, b) und der Reflektoranordnung (10; 9c, d) des Ausgleichsmittels variierbar ist.

8. Vorrichtung nach einem der vorhergehenden Ansprüche, **dadurch gekennzeichnet, dass** die Umlenkmittel (3) und das Ausgleichsmittel (9, 10, 11) an einem gemeinsamen Träger, insbesondere einem Torbogen (6), angeordnet sind.

9. Vorrichtung nach Anspruch 8, **dadurch gekennzeichnet, dass** der Laserstrahler (1) und der Träger, insbesondere der Torbogen (6), einstückig ausgebildet sind.

10. Vorrichtung nach einem der vorhergehenden Ansprüche, **dadurch gekennzeichnet, dass** der Laserstrahler (1) Laserstrahlen (4a-c) in einer bestimmbaren Reihenfolge generiert, die unter bestimmbaren Austrittswinkeln aus dem Laserstrahler (1) austreten.

11. Vorrichtung nach Anspruch 1, **dadurch gekennzeichnet, dass** der Laserstrahler (1) mehrere Laserstrahlen (4a-c) gleichzeitig generiert, die unter unterschiedlichen Austrittwinkeln aus dem Laserstrahler (1) austreten.

## Claims

1. Device for inscribing an object (5) using a laser beam, comprising:
a) a laser emitter (1) which emits a laser beam (4a-c) and
b) at least one imaging means (2) to guide the laser beam from the laser emitter (1) on to a focal point on the object (5),
**characterised in that**
c) the laser emitter (1) is designed to emit a laser beam at at least two different emission angles, thereby providing several beam paths,
d) whereby, depending on the emission angle of a laser beam (4a-c) from the laser emitter (1), at least one laser beam is assigned to a deflecting means (3a, 3b; 9a-d, 10, 11) so that beam lengths of the beam paths are each arranged such that, when a laser beam travels along them, at least two different sides of said object (5) can be inscribed without changing the position of said object,
e) whereby a compensating means is provided in the shortest beam path and/or in at least one other beam path, so that the optical path lengths of all beam paths are equal.

2. A device in accordance with claim 1, **characterised in that** the laser emitter (1) comprises a laser and at least one deflecting means to change the emission angle of the respective laser beam (4a-c) from the laser emitter (1) by deflecting a laser beam emerging from the laser source.

3. A device in accordance with claim 2, **characterised in that** the deflecting device is a galvanic mirror.

4. A device in accordance with one of the preceding claims in which a lens (2) is arranged in a first beam path in order to project the laser beam (4c) on to a first side of the object (5), and/or is provided in this arrangement with at least one mirror (3a, 3b) respectively in at least one other beam path (4a, 4b) in order to deflect the laser beam on to at least one other side of the object (5).

5. A device in accordance with claim 4, **characterised in that** the compensating means (9, 10, 11) is provided in the first beam path and/or in at least one other beam path in order to compensate for the different optical path lengths between the first laser beam (4c) and at least one other beam path (4a, 4b).

6. A device in accordance with claim 5, **characterised in that** the compensating means comprises a number of mirrors (9a, b; 11) and a reflector arrangement (10; 9c, d).

7. A device in accordance with claim 6, **characterised in that** the distance between the mirrors (9a, b) and the reflector arrangement (10; 9c, d) of the compensating means can be varied.

8. A device in accordance with one of the preceding claims, **characterised in that** the deflecting means (3) and the compensating means (9, 10, 11) are arranged on a common support, in particular an arch-shaped frame (6).

9. A device in accordance with claim 8, **characterised in that** the laser emitter (1) and the support, in particular said arch-shaped frame (6), are constructed in one piece.

10. A device in accordance with one of the preceding claims, **characterised in that** the laser emitter (1) generates laser beams (4a-c) in a specific sequence which emerge from the laser emitter (1) at specific emission angles.

11. A device in accordance with claim 1, **characterised in that** the laser emitter (1) generates several laser beams (4a-c) simultaneously which emerge from the laser emitter (1) at different emission angles.

## Revendications

1. Dispositif pour l'inscription d'informations sur un objet (5) à l'aide d'un faisceau laser, comprenant :
a) un émetteur de faisceaux laser (1) pour l'émission d'un faisceau laser (4a-c) et
b) au moins un moyen de représentation (2), pour représenter le faisceau laser de l'émetteur de faisceau laser (1) sur un point de gravure situé sur l'objet (5),
**caractérisé en ce que**
c) l'émetteur de faisceaux laser (1) est conçu pour émettre un faisceau laser sous au moins deux angles de sortie différents et pour que soient ainsi orientés plusieurs trajets de faisceau,
d) en fonction de l'angle de sortie d'un faisceau laser (4a-c) hors de l'émetteur de faisceaux laser (1), au moins un faisceau laser est affecté à un moyen de renvoi (3a, 3b ; 9a-d, 10, 11), de telle sorte que des trajets de faisceau laser des trajets de faisceau laser sont conçus respectivement de façon à ce que, lorsqu'un faisceau laser traverse ceux-ci, au moins deux faces distinctes de l'objet (5) peuvent être inscrites sans changement de position de l'objet,
e) dans le trajet de faisceau laser le plus court et/dans au moins un autre trajet de faisceau laser est prévu un moyen d'équilibrage, de façon à ce que les longueurs optiques de trajectoire équivalent à tous les trajets de faisceau laser.

2. Dispositif selon la revendication 1, **caractérisé en ce que** l'émetteur de faisceau laser (1) comprend un laser ainsi qu'au moins un moyen de déviation, pour modifier l'angle de sortie de chaque faisceau laser (4a-c) sortant de l'émetteur de faisceau laser (1) grâce à la déviation d'un trajet de faisceau laser, lequel sort du laser.

3. Dispositif selon la revendication 2, **caractérisé en ce que** le moyen de déviation est un galvanomiroir.

4. Dispositif selon l'une quelconque des revendications précédentes, dans lequel une lentille (2) est disposée dans un premier trajet de faisceau laser pour représenter le faisceau laser (4c) sur une première face de l'objet (5), et/ou dans lequel, dans au moins un autre trajet de faisceau laser (4a, 4b), est prévu respectivement au moins un miroir (3a, 3b), pour renvoyer le faisceau laser sur au moins une autre face de l'objet (5).

5. Dispositif selon la revendication 4, **caractérisé en ce que** dans le premier trajet de faisceau laser et/ou dans au moins un autre trajet de faisceau laser, le moyen d'équilibrage (9, 10, 11) est prévu pour équilibrer la différence de longueur optique de trajectoire entre le premier trajet de faisceau laser (4c) et au moins l'autre trajet de faisceau laser (4a, 4b).

6. Dispositif selon la revendication 5, **caractérisé en ce que** le moyen d'équilibrage comprend un certain nombre de miroirs (9a, b ; 11) et un agencement de réflecteurs (10;9c,d).

7. Dispositif selon la revendication 6, **caractérisé en ce que** l'écart entre les miroirs (9a, b) et l'agencement de réflecteurs (10 ; 9c, d) du moyen d'équilibrage peut être modifié.

8. Dispositif selon l'une quelconque des revendications précédentes, **caractérisé en ce que** les moyens de renvoi (3) et le moyen d'équilibrage (9, 10, 11) sont disposés sur un support commun, en particulier un arc portail (6).

9. Dispositif selon la revendication 8, **caractérisé en ce que** l'émetteur de faisceaux laser (1) et le support, en particulier l'arc portail (6) sont conçus de manière monobloc.

10. Dispositif selon l'une quelconque des revendications précédentes, **caractérisé en ce que** l'émetteur de faisceaux laser (1) génère des faisceaux laser (4a-c) dans une succession pouvant être définie, lesquels faisceaux laser sortent de l'émetteur de faisceaux laser (20) sous des angles de sortie pouvant être définis.

11. Dispositif selon la revendication 1, **caractérisé en ce que** l'émetteur de faisceaux laser (1) génère en même temps plusieurs faisceaux laser (4a-c), qui sortent de l'émetteur de faisceaux laser (1) sous différents angles de sortie.
